# EUROPEAN PATENT SPECIFICATION

(11) **EP 0 384 531 B1**
(45) Date of publication and mention of the grant of the patent: **29.12.1993**
(21) Application number: 90200380.5
(22) Date of filing: 20.02.1990
(51) Int. Cl.: A01K 15/02, A01K 1/01, A01K 1/02

(54) **A device for feeding dairy animals**
Fütterungsvorrichtung für Milchvieh
Station d'alimentation de bétail laitier

(30) Priority: 21.02.1989 NL 8900416
(43) Date of publication of application: 29.08.1990
(73) Proprietor: C. van der Lely N.V., NL-3155 PD Maasland (NL)
(72) Inventor: Van der Lely, Ary, NL-3155 PD Maasland (NL); Van der Lely, Cornelis, Zug (CH); Bom, Cornelis Johannes Gerardus, NL-3181 VC Rozenburg (NL); Van den Berg, Karel, NL-2971 BR Bleskensgraaf (NL)
(74) Representative: Mulder, Herman

(56) References cited:
- EP-A- 0 189 954
- CH-A- 294 595
- DE-C- 515 154
- FR-A- 1 342 247
- US-A- 3 137 271
- US-A- 3 827 403
- US-A- 4 304 193

## Description

The invention relates to a device for feeding animals, particularly dairy animals, such as dairy cows, with a feeding system for supplying food to an animal and a lavatory system for receiving droppings. Devices of this type are generally known e.g. from EP-A-0270165.

In closed or open loose houses or in meadows, the dairy animals deposit their droppings in randomly chosen places. When the animal lays down, it is in particular the udder that is contaminated, so that it will be necessary for the udder of each animal to be cleaned manually, while the remaining part of the animal is soiled as well. Moreover, since the droppings get mixed with the straw spread on the floor and with urine, they soil the stable floor to a significant extent. The cleaning of the stable, too, is a laborious, highly time-consuming and hence expensive operation.

The invention has for its object to improve these prior art arrangements. According to the invention, the device comprises sensor means in the lavatory system to establish whether the animal has deposited its droppings, the sensor means being connected to the feeding system to supply food to the animal in response to signals from the sensor means indicating that the animal has deposited its droppings. So, the device is constructed in such a way that animals are encouraged to deposit their droppings on a desired place by receiving food in the device.

In US-A- 3827403 a system is described wherein animals are discouraged to deposit their droppings on undesired places. When an animal raises its tail and so tends to deposit its droppings, the animal will be punished by electric shocks when this occurs on undesired places.

The invention is of significance not only for dairy cows, but also for other animals which, preferably, should remain clean.

As regards dairy cows, the following should be noted in connection with a hygienic and advantageous milk yield:
a. that the dairy animals should be optimally clean in order to prevent bacteria contained in their droppings from reaching the milk intended for human consumption;
b. that the dairy animal should have the possibility to lay down comfortably on a clean insulating layer, e.g. clean and dry straw, so that it will be able to produce a maximum quantity of milk in warm and favourable conditions even during periods of cold;
c. that the dairy animals should be able to move about in an accommodation, e.g. an open or closed loose house or a meadow, so that their blood circulation and milk yield are promoted.

Further, according to the invention the device is characterized in that the floor of the feeding station contains a grid to allow to pass the droppings of an animal present in the feeding station and the sensor means are arranged at or near the grid floor.

In a first embodiment, the sensor means are formed by a pair of contacts so arranged against two adjacent rods of the grid floor that they face each other and can be closed by droppings. In a second embodiment, the sensor means are formed by an infrared sensor attached in a collector element or gutter for collecting droppings, said collector element or gutter being placed under a grating in the floor and near the rear side of an animal present in the device. In the latter embodiment, it is a great advantage that ammonia binding material supply means may be provided to supply ammonia binding material in the collector element or gutter after the droppings have been deposited. In both embodiments, electronic means connected to the sensor means are included to control the feeding system in order to offer fodder after the animal has deposited its droppings.

In accordance with another feature of the invention means are provided near the grid floor to rinse the depositing area. By said cleaning means the depositing area with the grid floor may be kept clean. According to the invention the cleaning means are activated after a predetermined time has been passed after the sensor means have established the depositing of droppings. In a particular embodiment the cleaning means are located at such a level that during operation of the cleaning means water is directed towards the udder of an animal present in the device and the grid floor at the same time.

For a better understanding of the invention and to show how the same may be carried into effect, reference will now be made, by way of example, to the accompanying drawings, in which:
Figure 1 is a plan view of a stable in which the invention is applied;
Figure 2 is a plan view of a dung depositing area or lavatory system in accordance with the invention;
Figure 3 is a side view of the depositing area or lavatory system, which lavatory is also used as a feeding station;
Figure 4 is a side view of the depositing area or lavatory system as shown in Figure 2, which lavatory is also used as a milking parlour, and
Figure 5 shows, seen in side view, means attached to an animal for inducing same to deposit its droppings in a lavatory system.

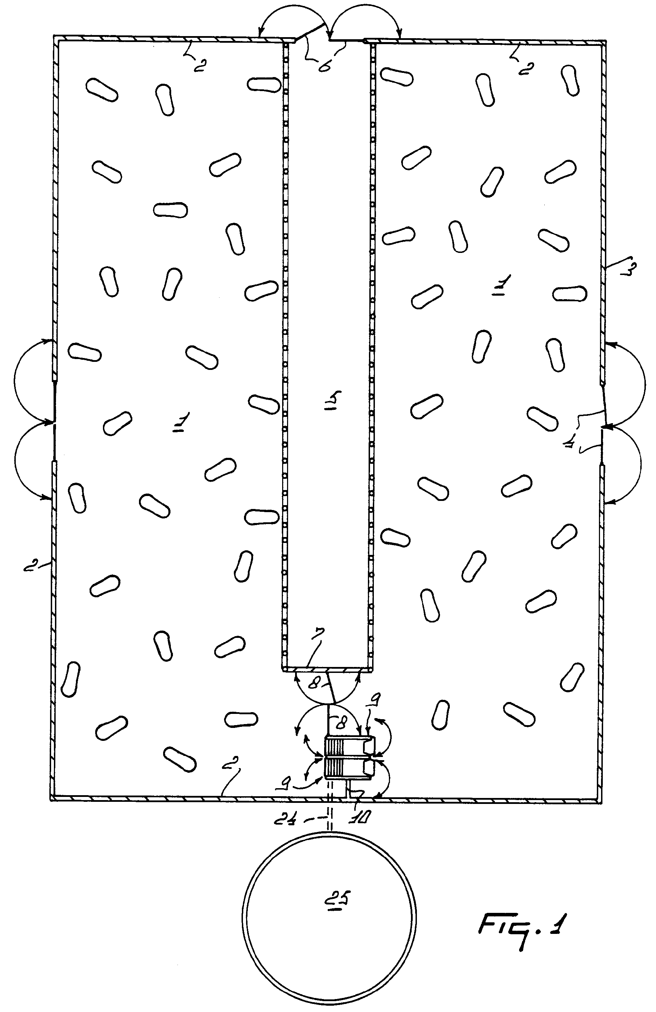

The plan view of Figure 1 concerns a stable or accommodation for dairy animals, i.e. animals whose milk is used for human consumption, e.g. dairy cows. The accommodation or room is denoted by the reference numeral 1 and is enclosed completely or partly by a number of walls 2 and 3 and a roof. In this embodiment, the wall 3 includes a pair of doors 4, through which the animals can be brought inside into the accommodation or outside into the open air. In this case, the accommodation is a closed loose house, in which the animals can move about freely in the room 1. However, the invention also relates to an open loose house, in which e.g. the wall 3 is lacking completely, so that the animals can move freely in and out from a passage way located next to the stable. In the embodiment shown, in the centre of the smallest dimension of the stable there is arranged a feeding passage 5 which extends through part of the largest dimension of the stable and is separated from the room 1 located on either side thereof by vertical gratings or the like, through which the animals can pass their heads in order to obtain fodder therefrom. The feeding passage is accessible from the outside via stable doors 6. The feeding passage end remote from the stable doors 6 is constituted by a wall 7 of equal width as the feeding passage. Two low hinging doors 8 are contiguous to the centre of the wall 7, which doors can be opened by the animals themselves, so that they can freely move from one room 1 into the other. Two droppings depositing areas or lavatory systems 9 are contiguous to the boundary of the hinging doors 8 that is remote from the feeding passage 5, the largest dimension of each of these depositing areas extending in this embodiment parallel to the shortest bounding wall 2 of the stable. Between the boundary of the depositing area 9 remote from the feeding passage 5 and closest to a bounding wall 2 and this bounding wall there is some clearance. This clearance is bridged by a short wall 10, the length of which is approximately equal to the width of each of the depositing areas 9.

In prior art accommodations or stables of the type shown in Figure 1 (however, with the exception of the droppings depositing areas 9 which, as will be described in greater detail hereinafter, form part of the invention), in which the dairy cows can walk around freely, the floor is preferably provided with an insulating layer, e.g. a layer of straw. The cows can lie down and rest on this layer of straw. Since the animals can walk about freely, their droppings are deposited in random places in the stable, which causes a considerable contamination thereof. It may happen that the cow lies down on the excrements (i.e. the more or less solid droppings and the urine), so that in particular the cow's udder will be contaminated. As the cows are to be milked, at least this portion of each cow must be cleaned manually: if each udder is to be cleaned very thoroughly, the time required therefor is quite considerable, partly because of the fact that the quantity of clean water required for each animal individually is not directly available in a loose house. Moreover, this water flows at random through the loose house, which still further increases the contamination of the stable, in particular when dung is removed therefrom. All these matters together render the milking and cleaning of the stable a laborious and time-consuming operation.

For a hygienic and advantageous milk production it is desirable that:
a) the dairy animals should be optimally clean in order to prevent bacteria contained in their droppings from reaching the milk intended for human consumption;
b) the dairy animal can lie down comfortably on an insulating layer of e.g. dry and clean straw, so that it will be able to produce a maximum quantity of milk in warm and favourable conditions even during periods of cold;
c) the dairy animals can move about in their accommodation, e.g. an open stable or a meadow, so that their blood circulation and milk yield are promoted.

In order to obviate the above-mentioned disadvantages and to satisfy said hygienic and other conditions for an appropriate milk yield, the accommodation of the animals (the loose house, but also a meadow) is provided with at least one droppings depositing area or lavatory system, which in Figure 1 is denoted by the reference numeral 9.

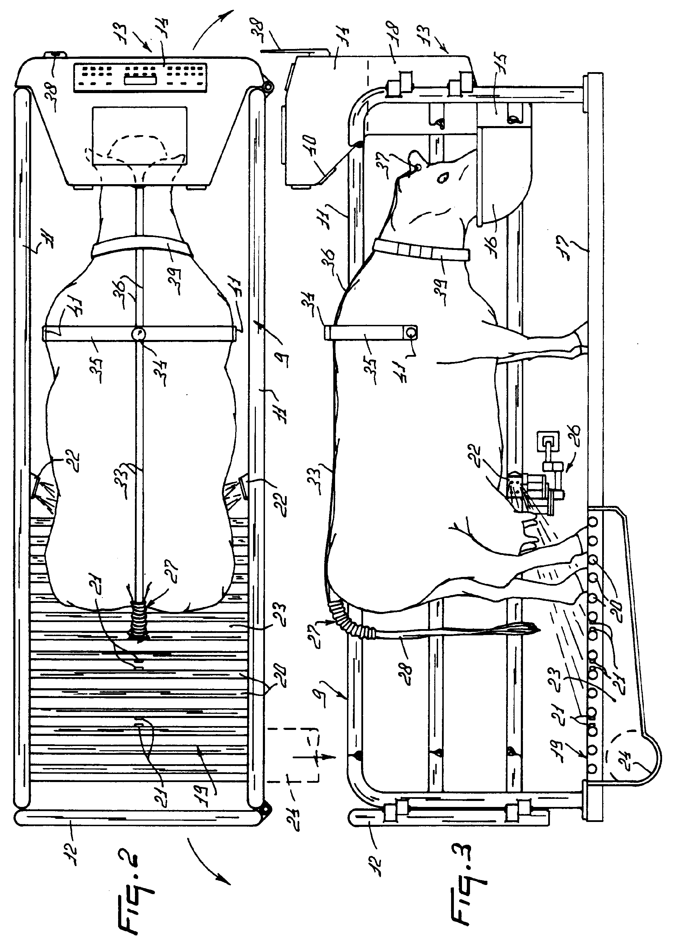

Each depositing area 9 as shown in the embodiment of Figures 2 to 4 is bounded at its two longitudinal sides by a railing or grating 11, which two are arranged parallel to each other and at a relative interspace that slightly exceeds the width of the type of dairy animal moving about in the stable or meadow. The depositing area 9 has an entrance which is closable by means of a door 12 and, at its other end, an exit which is closable by means of a door 13. The two doors 12 and 13 are hingeable about associated vertical hinges which are connected to one of the lateral bounds of the despositing area; the doors are hingeable in a direction as indicated by arrows in Figure 1. The entrance doors 12 are hingeable through an angle of approximate 90° and the exit doors 13 through an angle of 180°.

The entrance door 12 is a flat door which can be made of any desired material. The exit door 13 comprises equipment to play an important part in the implementation of the inventive idea. The upper part of the door 13 comprises a compartment or housing accommodating a partly electronic, partly electrical installation 14, and also, near the bottom side of the housing for the installation 14, a feeding system 15 for filling a trough 16 which is within the reach of an animal present in the depositing area 9. The trough 16 is arranged above the floor 17 of the depositing area 9 at a height which is advantageous for the animal. The feeding system 15 effects the supply of relatively small quantities of fodder which is very tasty for the relevant type of dairy animal. The trough 16 is filled from a fodder storage room 18. The room 18 is accommodated in a continuation of the housing for the electrical installation 14, but is of course separated from said installation by a tight partition.

The largest dimension of the space within the depositing area 9 exceeds the length of a full-grown dairy animal present in the depositing area 9 by approximately 20 to 40 percent.

The doors 12 and 13 form locking means for the depositing area. This locking means can be controlled electrically or electronically. In general, they form means to retain an animal temporarily in the depositing area. As an alternative, the locking means may include rods, at least one of which is adjustable; these rods can be brought at both sides of the neck of an animal to hold the animal in a practically fixed position in the depositing area. The retaining means may include a control member to release the locking means after the droppings have been deposited.

Near the rear end of an animal present in the depositing area 9, the floor 17 is structured as a grid floor 19 in the form of a plurality of rods 20 extending transversely to the longitudinal direction of the depositing area 9 and intended to allow to pass the droppings of an animal present on the grid. Preferably, near the grating there are provided cleaning means to rinse the depositing area and the grating in particular. Furthermore the depositing area is provided with means, preferably electronic means, to establish the fact whether an animal has deposited its droppings or not. At least two adjacent, parallel rods 20 are provided with sensors or contacts 21. The sensors or contacts 21, provided in pairs, are so arranged against the adjacent rods that they face each other, and are connected to the associated rods in a position located below the upper sides thereof. The sensors 21 are connected via (non-shown) cables to the electronic installation 14 near the front side of the animal present in the depositing area 9.

As an alternative, the electronic means to establish the fact whether an animal has deposited its droppings or not may include a sensor, preferably an infrared one, attached in a collector element or gutter for collecting droppings. This collector element or gutter may be placed under the grating in the floor. In this alternative, it is of great advantage that ammonia binding material supply means may be provided to supply ammonia binding material in the collector element or gutter after the droppings have been deposited. This ammonia binding material is commercially available; the use of this material is highly important from an ecological point of view.

As is apparent from Figures 2 and 3, against each of the lateral bounds 11 there is arranged a washing system 22 which may be designed in the form of sprinklers or showers. Seen in the side view of Figure 3, each washing system 22 is located at the level of the udder of an animal present in the depositing area or, taken in the direction of the exit door 13, at a short distance in front of the position of the udder. The washing system 22 is arranged such that the water sprinkled during operation of this system is directed obliquely rearwardly towards the udder and also towards the grid floor 19.

Below the grid floor 19 there is positioned a collecting bin 23 for collecting the droppings and the water used.

The bin 23 has a sloping bottom, so that the droppings and the water used can be discharged to a discharge pipe 24, which pipe is passed through under the nearby wall 2 and ends in a dung pit or slurry pit 25 arranged in the bottom. The pit 25 is accessible from above so as to allow the collected dung to be pumped into e.g. a slurry tank or similar drivable dung container.

Consequently, a lavatory system 9 is arranged between the accommodation 1 and the dung storage room 25.

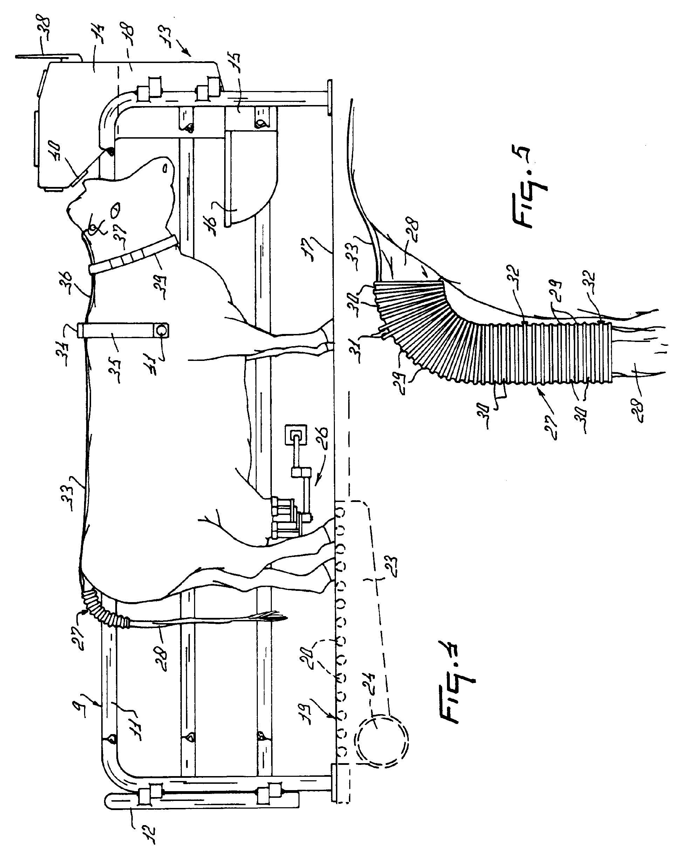

As is apparent from Figure 4, the depositing area 9 may also be provided with an automatic milking implement 26, which implement is connected pivotably to one of the lateral boundaries 11 of the depositing area and can be operated in such a way by means of the electronic installation 14 that it can be connected automatically to the teats of the udder of an animal present in the depositing area, the milk being discharged in a (non-shown) manner to a milk storage container. Alternatively, the depositing area 9 may be provided with a milking implement, the teat cups being applied manually to the teats of the udder of an animal present in the depositing area 9.

Consequently, the depositing area 9 is arranged as a location where a dairy animal can deposit its droppings, as a washing station for cleaning at least the animal's udder, i.e. to keep the animal clean, as a milking parlour for automatically or non-automatically milking an animal present therein and as a feeding station for feeding this animal. The depositing area for the deposition of droppings, in combination with the washing system, constitutes a lavatory system which can be used by several animals present in the accommodation 1.

It is a feature of the inventive idea either to discourage animals present in the accommodation 1 to deposit their droppings thereinside (i.e. outside the lavatory system 9), or to induce them to deposit their droppings in the depositing area or lavatory system. This can be achieved in different manners, inter alia by luring the animals to the depositing area 9.

A method of discouraging an animal present in the accommodation 1 of dropping its droppings then and there includes the application of a suitable device to the animal itself. This device comprises a flexible tube 27 to be arranged around the tail 28 of each of the animals (Figure 5). The flexible tube 27 is pushed as far as possible to the upper side of the tail 28 and has a length which is such that, when the animal lets its tail hang, it extends in the downward direction to below the position where the droppings leave the animal. The tube 27 is provided with a plurality of relatively stiff rings or ribs 29 which are relatively closely interspaced and are interconnected by relatively thin, flexible connection members 30 which, in the stretched position of the tube, are in the form of short cylinders and on both sides and all around are contiguous to the rings 29. At a short distance from the upper end of the tube pushed around the tail there are applied on two adjacent rings 29 facing sensors or contacts 31. The sensors 31 are provided on the farthest outwardly and upwardly located portions of the two adjacent rings 29, when the tail is in the position as shown in Figure 5. On the lower end of the tube 27, taken in the downward position of the tail 28 shown in Figure 5, sensors 32 are applied on one or on a plurality of rings 29, i.e. in a location at the periphery of a ring 29 which, in the position shown in the drawing, is directed towards the cow's body, but below the position where the excrements leave the body. By means of the thin, flexible electrical connection wires 33 shown in Figures 2 to 4, which are passed along the upper side of the animal to the front and are secured to the animal's body, the sensors 31 and 32 are connected to a member 34 (Figure 2) which is arranged on the highest point of a belt 35 hung in the transverse direction on the animal's body. From the member 34 further connecting wires 36 are passed over and secured to the upper side of the body and the neck of the animal, which wires terminate in small loudspeakers 37 (Figures 3 and 4) which are attached to or near the animal's ears on its head.

The member 34 includes a small battery or another type of energy source and a compact electronic circuit, a portion of which is designed as a simple radio signal receiver.

If, in accordance with a first method of discouraging the animal to deposit its droppings in the accommodation 1, the animal moves its tail upwards, the flexible tube 27 is stretched, so that the contacts 31 contact each other. This causes a signal to be conveyed to the member 34 via the connecting wires 33, whereby the circuit accommodated in the member 34 is energized and via the connection wires 36 in the loudspeakers 37 there is produced a sound which is unpleasant to the animal (e.g. a squeaking or whistling one), which sound reaches the animal's ears via the loudspeakers 37. When an animal, which is in the accommodation 1 for the first time and has been provided with the means described in the foregoing, has experienced this unpleasant effect for a number of times, has observed where other animals accustomed to stay in the accommodation can deposit their droppings and has been guided one or several times to the depositing area by a person present, it knows in which direction to go when the disagreeable sound is received. Especially when the animal is aware that the unpleasant sound will disappear in the depositing area, after some experience it will go without any further incentives to the depositing area with the object of depositing its droppings there.

For, as soon as the animal enters the depositing area 9, it comes within the range of the signal transmitted by a radio transmitter present in the electronic installation 14 of the depositing area 9 (aerial 38 in Figures 2 to 4). The signal transmitted by this radio apparatus via the aerial 38 is comparatively weak and is radiated substantially within the confines of the depositing area 9. The receiver present inside the member 34 provided on the animal includes an AND-gate which is controlled by this radio signal and whose bias has been adjusted to such a threshold value that it does not change state until after the animal has entered the depositing area 9. The switched AND-gate now interrupts the squeaking or whistling sound produced by the member 34, which sound was initiated by the closing contacts 31. Thus, after some experience the animal present in the accommodation 1 and causing the contacts 31 to close will go to the depositing area 9, since it knows that the disagreeable sound in its ears will disappear in that area. The animal encouraged thus to enter the depositing area 9 also knows that the trough 16 is located there as well as that, if it deposits its droppings there, it will be offered a quantity of fodder.

For, when the animal, standing in the depositing area 9, deposits its droppings on the grid floor 19, these droppings close a pair of contacts 21 of the grid floor 19, whereby there is applied to the electronic apparatus 14 a signal which energizes a control system forming part of the apparatus 14, which control system causes a dosed quantity of fodder to fall from the storage room 18 into the trough 16. After some experience, the animal will also know that, if it fails to deposit its droppings on the grid floor 19, the trough 16 remains empty and the exit door 13 remains closed.

Inside the electronic system 14, the signal produced by the sensors 21 as to the passage of droppings can be combined with a signal derived from a cow identification collar 39 to record the fact that the relevant animal (a data from the collar 39) has indeed deposited its droppings on the grid floor 19 of the lavatory system 9. Thus, it can be established which animals still are insufficiently experienced to make use of the depositing area 9.

After an animal has deposited its droppings on the grid floor 19 in the lavatory system 9 and the relevant signal has been established by the electronic system 14, not only fodder is conveyed to the trough 16 but also, after a short period of time determined by a clock or a time measuring system, the washing device 22 is made operative, by means of which, preferably from two sides, the udder is cleaned by spraying with preferably tepid or slightly warm washing water. The obliquely rearwardly and inwardly sprayed washing water is directed such that also the remnants of the droppings on the grid floor are washed down into the receptable 23. After a period of time determined by the time measuring system, the automatic milking implement 26 is pivoted inwardly towards the udder and is connected automatically to the teats, so that the depositing area 9 also serves as a milking parlour.

Once the sequential washing and milking procedures have ended, the electronic system 14, after the end of the milking procedure has been signallized, triggers a control system which causes the door 13 to open through 180°, so that the animal will be able to walk to the accommodation 1.

It should be noted that a further luring means can be used by providing the system 14 with a loudspeaker 40 which, optionally, can produce continuously sounds that are agreeable to the animals and are audible in the entire accommodation 1.

The belt 35 (Figures 2 to 4), which hangs down across the back of the animals on both sides to approximately halfway, is provided at its lowermost ends with an element 41 which is connected to the member 34 via electric connecting wires. The elements 41 are fitted with electrodes or the like, by means of which the animal can be subjected to slight electric shocks, similar to those provided by known cattle goads. These shocks require comparatively little energy. The elements 41 can be fed from the energy source accommodated in the member 34. Taken in the longitudinal direction of the animal, a second belt 45 may be arranged in a different position on the back, which belt is also provided with elements 41 to be fed from an associated, further energy source.

The elements 41 constitute the basis for a further method of having the animal move towards the lavatory system 9. This method also includes a radio apparatus connected to the depositing area 9 and transmitting comparatively strong signals into the accommodation 1. The member 34 may include a receiving system for the said last signals, which system is provided with detection means for detecting the direction from which the signals are received. As soon as the animal's tail moves upwardly and the contacts 31 close, the signal supplied by these contacts renders the receiving system present in the member operative, which causes an element 41 to apply slight shocks to that side of the animal which is remote from the radio signal source (near the lavatory system 9). The animal experiences these shocks as unpleasant and is induced to move into the direction away from the shocks, so that it will go towards the radio signals, i.e. towards the lavatory system 9. When, for some reason or other the animal might turn round, the elements 41 arranged at the other side of the animal will produce shocks, so that the animal will move towards the lavatory system again. Thus, the animal's direction of movement is determined. This goading implement may be of such a structure that, when the animal goes in the proper direction, no shocks occur. After some experience, the animal will move towards the lavatory system 9 upon lifting its tail.

In this method it is alternatively possible for the belt 35 to be provided with a small, gimballed compass, in which the deflection of the compass needle is limited by contacts, by means of which, after activation by the contacts 31 and the compass needle, there are produced shocks at a side of the animal, thereby driving same towards the lavatory system 9. These goading systems in accordance with the second method may be combined with a sound source which produces sounds that are agreeable to the animals and which is attached to the lavatory system 9.

In accordance with a further method, the lavatory system 9 is produced with a call system which, after regular time intervals, produces sounds that are agreeable to the animals. These sounds may correspond to sounds which imitate the sound of fodder dropping in a trough and/or of falling water, in which latter case thirsty animals will be lured.

A further method of obviating contamination of the stable and of keeping the animals clean is performed by the sensors 32 which, in response to the fact that the animal has lain down in droppings or in response to the droppings produced by the standing animal, activate the member 34 and the loudspeakers 37, as a result of which the animal will move towards the lavatory system 9.

The afore-mentioned methods may, of course, be combined in part or as a whole, thereby either discouraging the animals to deposit their droppings inside the accomodation 1 or encouraging them to deposit their droppings inside the lavatory system 9, and/or forcing and/or luring them towards the lavatory system 9. After some habituation and experience, i.e. by observing the behaviour of other animals or by having been guided towards the lavatory system during the initial stage of their stay in the accommodation, the animals will be brought to a certain automatic behaviour of regularly utilizing the lavatory system by these methods, both separately and in combination. Once the animal has arrived in the lavatory system 9, the sequence of actions and occurrences (depositing of droppings, recording with the aid of the cow identification collar, feeding, washing and milking) are performed in the order as described in the foregoing. As soon as the electronic system 14 receives the signal defining the end of the milking operation, the electronic system 14 triggers the control system that opens the door 13, while at the same time the loudspeaker 40 produces for a short period of time a disagreeable squeaking or whistling sound as an incentive to the animal to leave the lavatory system 9.

It should be noted that the inventive idea is not limited to the use of a depositing area or lavatory system 9 provided with the further described features in combination with an open or a closed loose house, but, alternatively, the depositing area 9 may be of a movable structure, such as e.g. a depositing area 9 on wheels which are adjustable in height; the depositing area can be moved by a tractor to a predetermined location in a meadow. After the depositing area has been placed in position, the wheels on both sides thereof are moved upwardly, so that the floor of the depositing area is flush with the meadow level. The supply of energy of such a depositing area 9 positioned in a meadow can be effected by a power supply cable, but, alternatively, by means of a solar energy system in combination with batteries. At the location in the meadow where the depositing area 9 is placed, a dung pit can be dug in in such a manner that it is contiguous to the grid floor 19.

## Claims

1. A device for feeding animals, particularly dairy animals, such as dairy cows, with a feeding system (15) for supplying food to an animal and a lavatory system (9) for receiving droppings of the animal, characterized in that sensor means (21) are provided in the lavatory system (9) to establish whether the animal has deposited its droppings, the sensor means (21) being connected to the feeding system (15) to supply food to the animal in response to signals from the sensor means (21) indicating that the animal has deposited its droppings.

2. A device as claimed in claim 1, characterized in that the floor (17) of the lavatory system (9) contains a grid (19) to allow to pass the droppings of an animal present in the lavatory system (9) and the sensor means (21) are arranged at or near the grid floor (19).

3. A device as claimed in claim 2, characterized in that the sensor means (21) are formed by a pair of contacts so arranged against two adjacent rods (20) of the grid floor (19) that they face each other and can be closed by droppings.

4. A device as claimed in.claim 2, characterized in that the sensor means (21) are formed by an infrared sensor attached in a collector element or gutter under the grid floor.

5. A device as claimed in any one of the claims 2 to 4, characterized in that near the grid floor (19) cleaning means (22) are provided to rinse the depositing area.

6. A device as claimed in claim 5, characterized in that the cleaning means (22) are activated after a predetermined time has passed after the sensor means have established the depositing of droppings.

7. A device as claimed in claim 5 or 6, characterized in that the cleaning means (22) are located at such a level that during operation of the cleaning means (22) water is directed towards the udder of an animal present in the device and the grid floor (19) at the same time.

8. A device as claimed in any one of the preceding claims, characterized in that it includes a milking apparatus (26), specifically an apparatus for automatically milking animals.

9. A device as claimed in any one of the preceding claims, characterized in that the device is displaceable.

## Patentansprüche

1. Vorrichtung zum Füttern von Tieren, insbesondere von Milchvieh, wie z. B. Milchkühen, mit einer Fütterungsanlage (15) zum Versorgen eines Tieres mit Futter und mit einem Entsorgungssystem (9) zur Aufnahme der Ausscheidungen des Tieres,
dadurch gekennzeichnet, daß in dem Entsorgungssystem (9) ein Sensor (21) angeordnet ist, der feststellt, ob das Tier Ausscheidungen von sich gegeben hat, und der mit der Fütterungsanlage (15) verbunden ist, die das Tier als Reaktion auf Signale des Sensors (21), die anzeigen, daß es Ausscheidungen von sich gegeben hat, mit Futter versorgt.

2. Vorrichtung nach Anspruch 1,
dadurch gekennzeichnet, daß der Boden (17) des Entsorgungssystems (9) einen Rost (19) aufweist, durch welchen die Ausscheidungen eines sich im Entsorgungssystem (9) aufhaltenden Tieres hindurchfallen, und daß der Sensor (21) im oder nahe an dem Rost (19) angeordnet ist.

3. Vorrichtung nach Anspruch 2,
dadurch gekennzeichnet, daß der Sensor (21) aus zwei Kontakten gebildet ist, die an zwei nebeneinanderliegenden Stangen (20) des Rostes (19) derart angeordnet sind, daß sie einander zugewandt sind und der Kontakt durch Ausscheidungen zu schließen ist.

4. Vorrichtung nach Anspruch 2,
dadurch gekennzeichnet, daß der Sensor (21) aus einem Infrarot-Sensor besteht, der in einer Sammelvorrichtung oder Rinne unter dem Rost angeordnet ist.

5. Vorrichtung nach einem der Ansprüche 2 bis 4,
dadurch gekennzeichnet, daß nahe dem Rost (19) eine Reinigungsvorrichtung (22) zum Spülen des Entsorgungsbereiches vorgesehen ist.

6. Vorrichtung nach Anspruch 5,
dadurch gekennzeichnet, daß die Reinigungsvorrichtung (22) nach Ablauf einer vorgegebenen Zeitspanne aktiviert wird, nachdem das Vorhandensein von Ausscheidungen durch den Sensor festgestellt worden ist.

7. Vorrichtung nach Anspruch 5 oder 6,
dadurch gekennzeichnet, daß die Reinigungsvorrichtung (22) in einer solchen Höhe angeordnet ist, daß während des Betriebs der Reinigungsvorrichtung (22) Wasser auf das Euter eines in der Vorrichtung befindlichen Tieres und gleichzeitig auf den Rost (19) gerichtet wird.

8. Vorrichtung nach einem der vorhergehenden Ansprüche,
dadurch gekennzeichnet, daß die Vorrichtung einen Melkapparat (26), insbesondere einen Apparat zum automatischen Melken von Tieren aufweist.

9. Vorrichtung nach einem der vorhergehenden Ansprüche,
dadurch gekennzeichnet, daß die Vorrichtung transportabel ist.

## Revendications

1. Dispositif pour nourrir des animaux, en particulier des animaux producteurs de lait, tels que des vaches laitières, avec un système d'alimentation (15) pour fournir de la nourriture à un animal et un système hygiénique (9) pour recevoir les déjections de l'animal,
**caractérisé** en ce que des moyens détecteurs (21) sont prévus dans le système hygiénique (9) pour déterminer si l'animal a déposé ses déjections, ces moyens détecteurs (21) étant reliés au système d'alimentation (15) pour fournir de la nourriture à l'animal en réponse à des signaux venant des moyens de détection (21) indiquant que l'animal a déposé ses déjections.

2. Dispositif selon la revendication 1, caractérisé en ce que le plancher (17) du système hygiénique (9) contient une grille (19) pour permettre le passage des déjections d'un animal présent dans le système hygiénique (9) et les moyens détecteurs (21) sont disposés sur le plancher à grille (19) ou à proximité.

3. Dispositif selon la revendication 2, caractérisé en ce que les moyens détecteurs (21) sont constitués par une paire de contacts disposés contre deux barres adjacentes (20) du plancher à grille (19) de telle sorte qu'ils se font face l'un à l'autre et peuvent être fermés par les déjections.

4. Dispositif selon la revendication 2, caractérisé en ce que les moyens détecteurs (21) sont constitués par un capteur infrarouge attaché à un élément collecteur ou un caniveau sous le plancher à grille.

5. Dispositif selon l'une quelconque des revendications 2 à 4, caractérisé en ce que des moyens de nettoyage (22) sont prévus près du plancher à grille (19) pour rincer la zone de dépôt.

6. Dispositif selon la revendication 5, caractérisé en ce que les moyens de nettoyage (22) sont activés après l'écoulement d'un temps prédéterminé après que les moyens détecteurs ont constaté le dépôt de déjections.

7. Dispositif selon la revendication 5 ou 6, caractérisé en ce que les moyens de nettoyage (22) sont situés à un niveau tel que, pendant le fonctionnement des moyens de nettoyage (22), de l'eau soit dirigée vers le pis d'un animal présent dans le dispositif et, en même temps, vers le plancher à grille (19).

8. Dispositif selon l'une quelconque des revendications précédentes, caractérisé en ce qu'il comprend un appareil trayeur (26), spécifiquement un appareil pour traire des animaux automatiquement.

9. Dispositif selon l'une quelconque des revendications précédentes, caractérisé en ce que le dispositif peut être déplacé.
